# FASCICULE DE BREVET EUROPEEN

(11) **EP 3 067 568 B1**
(45) Date de publication et mention de la délivrance du brevet: **27.05.2020**
(21) Numéro de dépôt: 16159207.6
(22) Date de dépôt: 08.03.2016
(51) Int. Cl.: F04D 29/28, F04D 29/30, F04D 29/66

(54) **TURBINE DE VENTILATION DU TYPE A REACTION**
BELÜFTUNGSTURBINE VOM TYP REAKTIONSTURBINE
REACTION-TYPE VENTILATION TURBINE

(30) Priorité: 09.03.2015 FR 1551952
(43) Date de publication de la demande: 14.09.2016
(73) Titulaire: ECOFIT, 41100 Vendome (FR)
(72) Inventeur: BOUSSEMART, Franck, 45510 TIGY (FR); TOUATI, Mohamed, 41100 VENDOME (FR); HAUCHECORNE, Gilbert, 41310 Sasnières (FR); FERRAND, Pascal, 69450 SAINT CYR AU MONT D'OR (FR); BUISSON, Martin, 69250 POLEYMIEUX AU MONT D'OR (FR); RAMBEAU, Claire, 69380 CIVRIEUX D'AZERGUES (FR)
(74) Mandataire: Ipside

(56) Documents cités:
- WO-A2-2009/105208
- FR-A- 1 513 039
- US-A1- 2012 315 135

## Description

La présente invention concerne une turbine de ventilation, apte à créer un courant d'air destiné par exemple à refroidir des appareils ou des installations telles que des armoires de composants électroniques, ou encore destinée à des installations de climatisation.

Plus particulièrement, l'invention concerne une turbine comportant une roue entraînée en rotation par un moteur. La roue est de forme générale annulaire et comporte des pales réparties sur sa périphérie entre deux flasques respectivement inférieur et supérieur, le rotor du moteur étant solidaire du flasque inférieur.

La rotation de la roue engendre ainsi, par aspiration, un flux d'air au travers d'une ouïe fixe d'entrée, en partie supérieure, vers des canaux définis par les flasques supérieur et inférieur et les pales.

Ce type de turbine est dénommé turbine à réaction.

On connait un premier type de turbine à réaction, dans lequel les flasques supérieur et inférieur sont formés chacun d'un disque annulaire plat, disposé parallèlement l'un à l'autre, et entre lesquels sont fixées des pales constituées chacune d'un élément courbe, de forme arrondie, vu dans un plan transversal à l'axe d'écoulement de l'air. Les pales sont disposées perpendiculairement au plan des flasques. Les bords respectivement d'attaque et de fuite de chaque pale sont parallèles entre eux et orthogonaux aux flasques.

Ces turbines sont fabriquées en matériau plastique par moulage. On réalise d'abord le flasque supérieur, puis séparément, un ensemble comprenant le flasque inférieur et les pales perpendiculaires. Ensuite, on solidarise par collage ou soudage le bord libre des pales sur le flasque supérieur.

Par ailleurs, les exigences dans le domaine des turbines deviennent de plus en plus draconiennes, soit du fait de normes à caractère obligatoire, par exemple qui imposent une valeur de rendement minimal, soit des exigences de la clientèle en termes de décibels émis par la turbine.

Les turbines à réaction à pales perpendiculaires aux flasques supérieur et inférieur présentent des performances limitées au regard des exigences ci-dessus mentionnées.

On a donc proposé de réaliser des pales qui d'une part ne soient pas perpendiculaires aux flasques supérieur et inférieur, et d'autre part soient, en quelque sorte, « déformées » angulairement selon un mouvement hélicoïdal d'axe colinéaire à celui de l'écoulement de l'air, en partant d'une pale courbe perpendiculaire que l'on imagine fixée selon son bord inférieur sur le flasque inférieur.

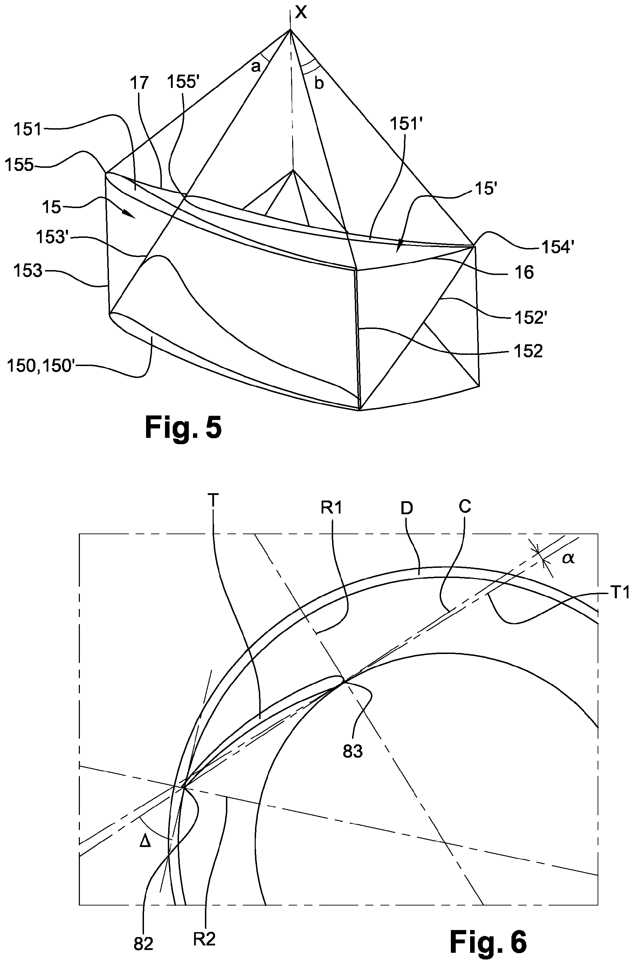

Comme montré sur la figure 5, à titre illustratif et pour illustrer le principe général de réalisation de telles pales arquées, celles-ci sont telles que :
- Les bords de fuite et d'attaque sont inclinés par rapport aux plans parallèles des flasques ;
- Leur inclinaison, par rapport à l'axe du flux d'air, varie depuis le bord d'attaque jusqu'au bord de fuite ;
- Les bords d'attaque et de fuite présentent des inclinaisons respectives, par rapport à l'axe de rotation, différentes par rapport à l'axe d'écoulement de l'air.

Ce type de pales fait que la variation de pression au bord d'attaque est graduelle, et limite les turbulences en sortie de pale, ce qui concourt à améliorer le rendement d'une part et réduire le bruit d'autre part.
Dans le domaine des turbines à réaction, ces pales arquées sont qualifiées par le terme anglais "sweep", employé par l'homme de l'art dans ce domaine technique spécifique.
Cependant, ce type de pales arquées complique la fabrication des turbines. En effet, il n'est pas possible de réaliser en une seule pièce les pales et le flasque inférieur, compte tenu de l'impossibilité de démouler un tel ensemble, résultant de la forme arquée et complexes des pales.
La demande de brevet américain US 2012/0315135 A1 décrit une turbine comportant des pales présentant un « sweep », la turbine étant réalisée grâce à l'utilisation de deux moules.

A ce jour, la fabrication de telles turbines dite à réaction, en matériau plastique par moulage, nécessite trois étapes de fabrication (une pour chacun des flasques supérieur et inférieur et les pales) et deux étapes successives d'assemblage comme déjà exprimé plus haut, à savoir assembler les pales sur le flasque inférieur, puis ensuite le bord libre de chaque pale sur le flasque supérieur.

De plus, les turbines connues munies de pales avec "sweep" sont susceptibles de perfectionnement et d'amélioration, au regard du rendement d'une part et de la réduction du bruit d'autre part.

La présente invention vise à remédier à cette situation, à savoir proposer une turbine à réaction qui puisse être fabriquée facilement en limitant les étapes de fabrication, voire en supprimant les étapes d'assemblage de l'art antérieur, et qui en outre présente un rendement amélioré, fonctionne en n'émettant qu'un bruit réduit.

A cette fin, selon l'invention, une turbine à réaction destinée à créer un flux d'air par rotation sur elle-même selon la revendication 1 est proposée.

La turbine étant réalisé par moulage, on peut démouler la pièce unique constituée du flasque inférieur et des pales, ceci permettant une étape unique d'assemblage final de ladite pièce unique avec le flasque supérieur, pour réaliser la turbine.

De préférence, l'angle de calage du bord de fuite a la même valeur en pied de pale (vers le flasque inférieur) et en tête de pale (vers le flasque supérieur).

Selon encore une autre caractéristique, au niveau de la jonction du bord de fuite et du flasque supérieur, l'angle « gamma », dit « angle de sortie d'air », formé par d'une part la direction radiale incluant le flasque supérieur, et d'autre part la perpendiculaire au plan distal du flasque inférieur, est compris entre 50 °et 75 ° et de pr éférence entre 55 ° et 70 ° et de manière encore plus préférée est de l'ordre de 62 °.

Selon une réalisation, pour une turbine de diamètre de 250 mm, la corde d'une pale a une longueur de 85 mm, la corde étant définie comme la longueur entre le bord de fuite et le bord d'attaque.

Selon une autre caractéristique, l'angle α (alpha) formé par la corde et la tangente au rayon passant par l'extrémité du bord d'attaque, est compris entre 7 ° et 22 ° et de préférence entre 10 ° et 1 8°, et de manière encore plus préférée est de l'ordre de 12 °.

Selon l'invention, les pales sont disposées angulairement, vu dans un plan diamétral orthogonal à l'écoulement de l'air, selon une répartition qui n'est pas uniforme, c'est-à-dire que le secteur angulaire séparant le bord d'attaque d'une pale au bord d'attaque de la pale suivante, est différent de 360°/n, "n" étant le nombre de pales.

Toujours selon l'invention, lesdits angles de séparation de deux pales consécutives, présentent une variation globale entre l'angle le plus petit et l'angle plus grand, d'environ 30 %.

Les pales, selon cette forme de réalisation, sont réparties angulairement de façon que le barycentre de l'ensemble des pales soit situé au centre de la turbine coïncidant avec son axe de rotation sur elle-même.

Plus précisément, la valeur d'un premier angle, entre une première pale et une seconde pale, est supérieure à la moyenne des valeurs d'angle pour l'ensemble des pales, tandis que la valeur d'un second angle, entre la seconde pale et une troisième pale, est inférieure à la dite moyenne.

Selon un exemple d'une turbine à sept pales, les angles varient entre environ 40° et 60°, de préférence entre 44° et 54°.

La turbine de l'invention est notamment utilisée pour le refroidissement, (par exemple d'armoires informatiques), pour la filtration, ou pour des systèmes de climatisation.

L'invention concerne en outre un procédé de fabrication d'une turbine à réaction destinée à créer un flux d'air, par rotation sur elle-même, selon la revendication 8.

La présente invention est maintenant décrite à l'aide d'exemples uniquement illustratifs et nullement limitatifs de la portée de l'invention, et à partir des illustrations ci-jointes, dans lesquelles :
La figure 1 est une vue en coupe, selon un plan radial diamétral, de la turbine de l'invention, et le rotor du moteur et l'ouïe d'entrée d'air associés ;
La figure 2 montre une vue partielle, en perspective de côté, de la turbine de la figure 1, le moteur étant ôté pour des raisons de clarté ;
La figure 3 montre une vue en perspective de dessus de la turbine de la figure 2 ;
La figure 4 est une vue en coupe, selon un plan radial diamétral, de la turbine des figures 1, 2 et 3, le moteur étant ôté ;
La figure 5 est un schéma en perspective de dessus montrant la forme arquée, avec "sweep" d'une pale, par rapport à une pale courbe dite « perpendiculaire » ;
La figure 6 est un schéma théorique montrant l'angle de calage d'une pale ;
La figure 7 est une coupe selon un plan diamétral, montrant partiellement les deux flasques inférieur et supérieur, et une pale ;
La figure 8 est un schéma montrant les différents angles d'orientation de la partie aval plane du flasque supérieur ;
La figure 9 est une vue en coupe de la turbine, selon un plan transversal à l'axe de rotation, montrant la distribution angulaire de ces dernières.

Dans la suite de la description le terme de « hauteur », « largeur », « profondeur », les qualificatifs « horizontal », « vertical », « supérieur », « inférieur », « haut » et « bas » d'un élément sont utilisés dans le cadre d'une installation normale du moule, c'est-à-dire relatif à une notion verticale par rapport à un plan horizontal. De même, les termes « distal » et « proximal » s'entendent par rapport à l'écoulement de l'air, suivant l'axe de rotation de la turbine.

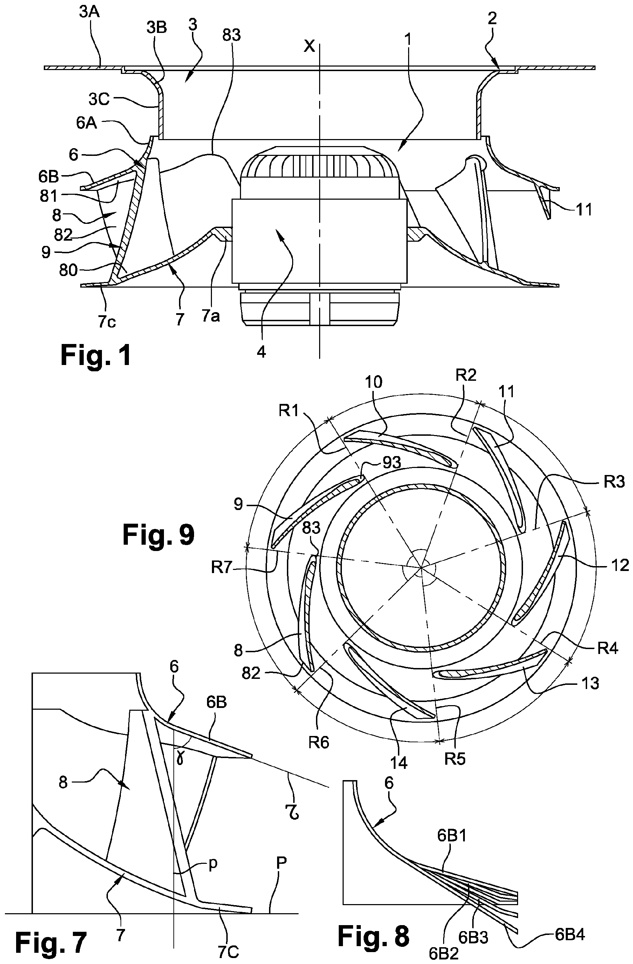

Il est maintenant fait référence à la figure 1 qui montre une vue d'un ensemble incluant la turbine de l'invention, en coupe selon un plan radial diamétral contenant l'axe de rotation X-X de cette dernière.

La turbine 1 est associé à une ouïe 2 d'entrée d'air, de forme générale annulaire et comprenant une ouverture centrale 3 par ou l'air est aspiré par la turbine 1 entraîné en rotation autour de l'axe X-X, par un moteur 4 sur la figure 1.

L'ouïe comporte ainsi, vue dans le plan de coupe de la figure 1, une partie plane annulaire 3A, puis une partie à section arrondie en termes de cercle 3B et enfin une partie sensiblement cylindrique droite, d'axe concentrique à l'axe X-X.

La turbine un comporte trois parties :
- un flasque supérieur 6 ;
- un flasque inférieur 7 ;
- une pluralité de pales dont trois seulement sont visibles sur la figure 1, compte tenu de la vue en coupe et de la présence du moteur 4, à savoir les pales référencées 8, 9, 10 et une partie seulement de la pale référencée 11.

Dans l'exemple montré sur les figures, la turbine comporte sept pales identiques.

Chaque pale est formée d'un élément de forme générale rectangulaire courbe. Ainsi, par exemple, la pale référencée 8 de la figure 1, comporte :
- un bord inférieur 80 ;
- un bord supérieur 81 ;
- un bord de fuite 82, sur son petit côté distal,
- un bord d'attaque 83 sur son petit côté proximal, proche de l'axe de rotation.

Le flasque supérieur 6 est de forme générale annulaire et comporte une première partie supérieure 6A à section courbe, et une seconde partie 6B sensiblement plane, vue en coupe, et en pente vers le flasque inférieur 7.

Le flasque inférieur 7 est de forme générale annulaire et comporte :
- une première partie proximale sensiblement plane et en pente en s'éloignant du flasque supérieur, et pourvue d'un bourrelet annulaire 7B délimitant une ouverture centrale 7C susceptible d'accueillir le rotor 5 du moteur 4 ;
- une seconde partie distale 7D sensiblement plane et transversale à l'axe de rotation.

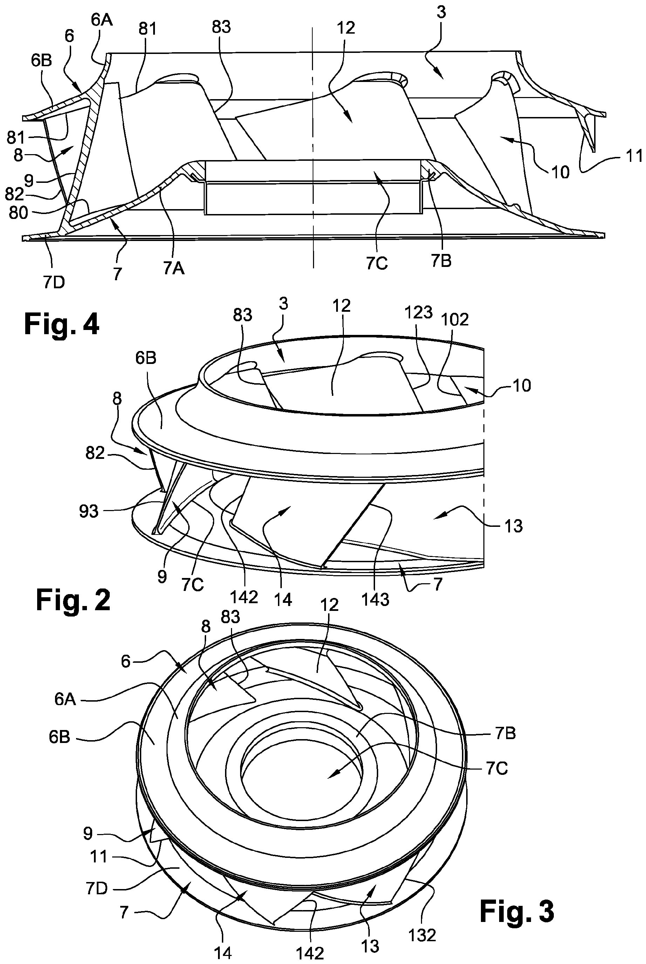

La figure 4 est une vue coupe similaire à celle de la figure 1, à la différence que le moteur 4 n'est pas représenté sur la figure 4. Ceci permet de mieux visualiser les pales, et de montrer ainsi d'une part la pale numéro 12, et d'autre part l'ouverture 7B centrale circulaire prévue sur le flasque inférieur 7.

Sur les figures 2 et 3, on retrouve les même des éléments ou éléments similaires à ceux des figures un et 4, portant les mêmes références. Les figures 2 et 3 permettent de visualiser les pales 13 et 14, outre celles visibles sur les figures 1 et 4.

Les bords de fuite et les bords d'attaque de chaque pale, portent une référence indexée par le chiffre respectivement 2 et 3, sur la référence de la pale correspondante. Ainsi, par exemple, la pale 14 comporte un bord d'attaque 142 et un bord de fuite 143 (figure 2).

Toutes les pales sont identiques du point de vues géométries, formes et dimensions.

On décrit ci-après, en référence à la figure 5, la forme particulière des pales arquées dites avec "sweep" comme mentionné précédemment.

Pour les besoins de la compréhension, une pale dite avec "sweep" est réalisée par déformation, en un mouvement hélicoïdal, d'une pale 15 de type connu, disposée parallèlement à l'axe de rotation de la turbine.

La pale 15, dite pale droite, est légèrement courbe en ce qu'elle présente une légère concavité tournée vers l'axe de rotation. Elle présente un bord supérieur 151, un bord d'attaque 153, un bord inférieur 150 et bord de fuite 152. Les bords d'attaque et de fuites sont parallèles entre eux et à l'axe de rotation. Les bords inférieurs 150 et supérieures 151 sont parallèles entre et perpendiculaires à l'axe de rotation.

La pale 15' selon invention, similaire aux autres pales de la turbine de l'exemple des figures, présente une forme telle qu'elle ait été réalisée par déformation de la pale 15 par un mouvement hélicoïdal, en maintenant le bord inférieur 150' de la pale 15' à la même place que le bord inférieur 150 de la pale 15 dite droite.

On aboutit ainsi à la pale 15' avec « sweep » qui présente un bord de fuite 152', un bord d'attaque 153', et un bord supérieur 151'.

La déformation hélicoïdale qui permet de passer de la pale 15 à la pale 15' est telle que :
- les bords supérieurs respectifs 151 et 151' de chaque pale sont dans le même plan ;
- le coin supérieur 154', du côté du bord de fuite de la pale 15', est décalé par rapport au point supérieur 154 correspondant de la pale 15, en ce que lesdits deux points supérieurs sont :
   * situés à la même distance de l'axe de rotation ;
   * décalés angulairement, par rapport à l'axe de rotation, d'une distance 16, représentant entre 5% et 19%, de préférence de l'ordre de 13% de la longueur dans le sens de rotation du bord supérieur 151', ou encore décalés d'un angle « a » d'environ 15°;
   * les deux bords d'attaque respectivement 155 et 155' sont décalés angulairement, dans le sens de rotation, d'une distance 17 représentant entre 3 % et 18 % (de préférence inférieure à 13%) de la longueur du bord supérieur 151', ou encore décalés d'un angle « b » d'environ 15°.

Lesdits angles sont tels que « b » est inférieur ou égal à « a ».

En référence à la figure 6, on décrit ci-après d'autres caractéristiques de la turbine de l'invention.

Pour chaque pale, l'angle « delta » dit « de calage en bord de fuite », formé par d'une part la corde « C » (qui passe par le bord de fuite 82 et le bord d'attaque 83), et d'autre part la tangente « T » au cercle de déplacement « D » au niveau du bord de fuite, est compris entre 20 ° et 45 ° et de préférence entre 22,5 ° et 29,7 ° et d e manière encore plus préférée est de l'ordre de 27 °.

Avantageusement, ledit angle « delta » a la même valeur en pied de pale (vers le flasque inférieur) et en tête de pale (vers le flasque supérieur).

Toujours en référence à la figure 6, il est décrit ci-après encore une autre caractéristique angulaire.

L'angle « α » formé par la corde « C » et la tangente « T1 » au cercle de déplacement « D » au niveau du bord d'attaque 83 de la pale, est compris entre 7 ° et 22 ° et de préférence entre 10 ° et 1 8 °, et de manière encore plus préférée est de l'ordre de 12 °.

Selon l'exemple montré, pour une turbine dont le diamètre, mesuré à partir du flasque inférieur, est de 250 mm, la corde d'une pale a une longueur de 87 mm, la corde étant définie comme la longueur entre le bord de fuite et le bord d'attaque.

Les figures 7 et 8 montrent une autre caractéristique de la turbine de l'invention au regard d'une pale 8.

L'angle « gamma », dit « angle de sortie d'air », formé par d'une part la direction radiale « r » passant par la partie dite droite 6B du flasque supérieur 6, et d'autre part la perpendiculaire « p » au plan distal « P » du flasque inférieur 7, est compris entre 50 ° et 75 °, et de préférence entre 55 ° et 70 ° et de manière encore plus préférée es t de l'ordre de 62 °.

Enfin, en référence à la figure 9, la turbine de l'invention est conçue de manière que les pales 8 à 14 sont disposées angulairement, vu dans un plan diamétral orthogonal à l'axe de rotation, selon une répartition qui n'est pas uniforme.

On définit un secteur angulaire comme étant délimité par deux rayons passant par les bords d'attaque de deux pales successives. Chaque secteur est séparé du suivant par un segment radial R1 à R7, passant par le centre de rotation O.

Plus précisément, le secteur séparant le bord d'attaque (par exemple 83) d'une pale (par exemple 8) au bord d'attaque (93) de la pale suivante (9), est différent de 360°/n, "n" étant le nombre de pal es. En l'occurrence, « n » étant égal à 7, les secteurs angulaires sont différents de 51,4°.

Dans l'exemple de la figure 9, lesdits angles de séparation de deux pales consécutives, présentent une variation globale entre l'angle le plus petit et l'angle plus grand, d'environ 30 %.

Les pales sont réparties angulairement de façon que le barycentre de l'ensemble des pales soit situé au centre de la turbine coïncidant avec son axe de rotation sur elle-même.

Selon une autre formulation, la valeur d'un premier angle de secteur angulaire, entre une première pale et une seconde pale, est supérieure à la moyenne des valeurs d'angle de secteur angulaire pour l'ensemble des pales, tandis que la valeur d'un second angle de secteur angulaire, entre la seconde pale et une troisième pale, est inférieure à la dite moyenne.

Lesdits angles de secteur angulaire varient entre environ 44° et 54°, selon des valeurs données à titre indicatif, successivement, d'environ : 58°, 46°, 54°, 51° 49°, 56° et 44°.

Le matériau constitutif des flasques et des pales est une matière plastique, thermo-formable.

Selon le procédé de l'invention, on réalise en une seule pièce l'un des flasques (de préférence le flasque inférieur) et les pales, par moulage de la matière plastique, puis on démoule ladite pièce, ce qui est rendu possible par la forme et les dimensions spécifiques des pales de l'invention. Ensuite, on assemble le flasque supérieur à la pièce unique par collage ou soudage du bord supérieur des pales avec la face inférieure du flasque supérieur.

## Revendications

1. Turbine (1) à réaction destinée à créer un flux d'air, par rotation sur elle-même, du type comportant :
- un flasque inférieur (7) et un flasque supérieur (6), chacun de forme générale annulaire, et sensiblement parallèles l'un à l'autre et perpendiculaires à l'axe de rotation (X-X) ;
- une pluralité de pales (8, 9, 10, 11, 12, 13, 14) disposées entre les deux flasques (6, 7), de forme arquée telles que :
∘ Les bords de fuite (82, 92, 102, 112, 122, 132, 142) et d'attaque (83, 93, 103, 113, 123, 133, 143) sont inclinés par rapport aux plans parallèles des flasques (6, 7) ;
∘ L'inclinaison des pales (8, 9, 10, 11, 12, 13, 14), par rapport à l'axe de rotation (X-X), varie depuis le bord d'attaque (83, 93, 103, 113, 123, 133, 143) jusqu'au bord de fuite (82, 92, 102, 112, 122, 132, 142) ;
∘ Les bords d'attaque (83, 93, 103, 113, 123, 133, 143) et de fuite (82, 92, 102, 112, 122, 132, 142) présentent des inclinaisons respectives différentes par rapport à l'axe de rotation (X-X) ; la turbine (1) étant réalisée par moulage, en matériau plastique, l'un des flasques (6, 7), de préférence le flasque inférieur (7), d'une part, et les pales (8, 9, 10, 11, 12, 13, 14) d'autre part, étant réalisés en une pièce unique, **caractérisée en ce que** pour chaque pale (8, 9, 10, 11, 12, 13, 14), l'angle (delta) (Δ), dit « de calage en bord de fuite », formé par d'une part la droite (C) passant par le bord de fuite (82, 92, 102, 112, 122, 132, 142) et le bord d'attaque (83, 93, 103, 113, 123, 133, 143), et d'autre part la droite passant par la tangente (T) au cercle de déplacement (D) du bord de fuite et le bord de fuite (82, 92, 102, 112, 122, 132, 142), est compris entre 22,5 ° et 29,7 °, et **en ce que** les pales (8, 9, 10, 11, 12, 13, 14) sont disposées angulairement, vu dans un plan diamétral orthogonal à l'écoulement de l'air, selon une répartition qui n'est pas uniforme, c'est-à-dire que le secteur angulaire séparant le bord d'attaque (83, 93, 103, 113, 123, 133, 143) d'une pale (8, 9, 10, 11, 12, 13, 14) au bord d'attaque de la pale suivante est différent de 360°/n, "n" étant le nombre de pales, et les angles de séparation de deux pales consécutives présentent une variation globale entre l'angle le plus petit et l'angle plus grand d'environ 30 %.

2. Turbine (1) selon la revendication 1, **caractérisée en ce que** l'angle (Δ) de calage du bord de fuite a la même valeur en pied de pale, du côté du flasque inférieur (7), et en tête de pale, du côté du flasque supérieur (6).

3. Turbine (1) selon la revendication 1, **caractérisée en ce que**, au niveau de la jonction du bord de fuite (82, 92, 102, 112, 122, 132, 142) et du flasque supérieur (6), l'angle « gamma » (γ), dit « angle de sortie d'air », formé par d'une part la direction radiale (r) incluant le flasque supérieur (6), et d'autre part la perpendiculaire (p) au plan distal (P) du flasque inférieur (7), est compris entre 50° et 75°, et de préférence de l'ordre de 62°.

4. Turbine (1) selon la revendication 1, **caractérisée en ce qu'**elle présente un diamètre de 250 mm, la corde (C) d'une pale (8, 9, 10, 11, 12, 13, 14) ayant une longueur de 85 mm, la corde (C) étant définie comme la longueur entre le bord de fuite (82, 92, 102, 112, 122, 132, 142) et le bord d'attaque (83, 93, 103, 113, 123, 133, 143).

5. Turbine (1) selon l'une des revendications 1 à 4, **caractérisée en ce que** l'angle α formé par la corde (C) et la tangente (T1) au rayon passant par l'extrémité du bord d'attaque (83, 93, 103, 113, 123, 133, 143), est compris entre 7 ° et 22 °, et de préférence entre 10 ° et 18 °, et de manière encore plus préférée est de l'ordre de 12 °.

6. Turbine (1) selon la revendication 5, **caractérisée en ce que** les pales (8, 9, 10, 11, 12, 13, 14) sont réparties angulairement de façon que le barycentre de l'ensemble des pales soit situé au centre de la turbine (1) coïncidant avec son axe de rotation (X-X) sur elle-même.

7. Turbine (1) selon la revendication 5 ou 6, **caractérisée en ce que** la valeur d'un premier angle, entre une première pale (8, 9, 10, 11, 12, 13, 14) et une seconde pale, est supérieure à la moyenne des valeurs d'angle pour l'ensemble des pales (8, 9, 10, 11, 12, 13, 14), tandis que la valeur d'un second angle, entre la seconde pale et une troisième pale, est inférieure à la dite moyenne.

8. Procédé de fabrication d'une turbine (1) à réaction, selon l'une des revendications 1 à 7, destinée à créer un flux d'air, par rotation sur elle-même, du type comportant :
- un flasque inférieur (7) et un flasque supérieur (6), chacun de forme générale annulaire, et sensiblement parallèles l'un à l'autre et perpendiculaires à l'axe de rotation (X-X) ;
- une pluralité de pales (8, 9, 10, 11, 12, 13, 14) disposées entre les deux flasques (6, 7), de forme arquée telles que :
∘ Les bords de fuite (82, 92, 102, 112, 122, 132, 142) et d'attaque (83, 93, 103, 113, 123, 133, 143) sont inclinés par rapport aux plans parallèles des flasques (6, 7) ;
∘ L'inclinaison des pales (8, 9, 10, 11, 12, 13, 14), par rapport à l'axe de rotation (X-X), varie depuis le bord d'attaque (83, 93, 103, 113, 123, 133, 143) jusqu'au bord de fuite (82, 92, 102, 112, 122, 132, 142) ;
∘ Les bords d'attaque (83, 93, 103, 113, 123, 133, 143) et de fuite (82, 92, 102, 112, 122, 132, 142) présentent des inclinaisons respectives différentes par rapport à l'axe de rotation (X-X) ;
∘ Pour chaque pale (8, 9, 10, 11, 12, 13, 14), l'angle (delta) (Δ), dit « de calage en bord de fuite », formé par d'une part la droite (C) passant par le bord de fuite (82, 92, 102, 112, 122, 132, 142) et le bord d'attaque (83, 93, 103, 113, 123, 133, 143), et d'autre part la droite passant par la tangente (T) au cercle de déplacement (D) du bord de fuite et le bord de fuite (82, 92, 102, 112, 122, 132, 142), est compris entre 22,5 ° et 29,7 °, les pales (8, 9, 10, 11, 12, 13, 14) étant disposées angulairement, vu dans un plan diamétral orthogonal à l'écoulement de l'air, selon une répartition qui n'est pas uniforme, c'est-à-dire que le secteur angulaire séparant le bord d'attaque (83, 93, 103, 113, 123, 133, 143) d'une pale (8, 9, 10, 11, 12, 13, 14) au bord d'attaque de la pale suivante est différent de 360°/n, "n" étant le nombre de pales, et les angles de séparation de deux pales consécutives, présentent une variation globale entre l'angle le plus petit et l'angle plus grand, d'environ 30 %,
le procédé étant **caractérisé en ce que** l'on réalise en une seule pièce l'un des flasques (6, 7), de préférence le flasque inférieur (7), et les pales (8, 9, 10, 11, 12, 13, 14), de préférence par moulage, en matériau plastique.

## Patentansprüche

1. Reaktionsturbine (1), die dazu bestimmt ist, durch Drehen um sich selbst einen Luftstrom zu kreieren, in der Art Folgendes beinhaltend:
- einen unteren Flansch (7) und einen oberen Flansch (6), jeweils in einer im Allgemeinen ringförmigen Form, und im Wesentlichen parallel zueinander, und senkrecht zur Drehachse (X-X);
- eine Vielzahl von Schaufeln (8, 9, 10, 11, 12, 13, 14), die zwischen den beiden Flanschen (6, 7) angeordnet sind, in Bogenform, dergestalt, dass:
∘ die Hinter- (82, 92, 102, 112, 122, 132, 142) und Vorderkante (83, 93, 103, 113, 123, 133, 143) in Bezug auf die parallelen Ebenen der Flansche (6, 7) geneigt sind;
∘ die Neigung der Schaufeln (8, 9, 10, 11, 12, 13, 14) in Bezug auf die Drehachse (X-X) von der Vorderkante (83, 93, 103, 113, 123, 133, 143) bis zur Hinterkante (82, 92, 102, 112, 122, 132, 142) variiert;
∘ die Vorder- (83, 93, 103, 113, 123, 133, 143) und Hinterkante (82, 92, 102, 112, 122, 132, 142) in Bezug auf die Drehachse (X-X) jeweilige unterschiedliche Neigungen aufweisen;
wobei die Turbine (1) durch Formen aus Kunststoffmaterial realisiert wird, wobei einer der Flansche (6, 7), vorzugsweise der untere Flansch (7), einerseits, und die Schaufeln (8, 9, 10, 11, 12, 13, 14) andererseits in einem einzigen Stück realisiert sind, **dadurch gekennzeichnet, dass** bei jeder Schaufel (8, 9, 10, 11, 12, 13, 14) der zur "Verkeilung an der Hinterkante" genannte Winkel (Delta) (Δ), der durch einerseits die Gerade (C), die durch die Hinterkante (82, 92, 102, 112, 122, 132, 142) und die Vorderkante (83, 93, 103, 113, 123, 133, 143) verläuft, und andererseits die Gerade, die durch die Tangente (T) am Fortbewegungskreis (D) der Hinterkante und die Hinterkante (82, 92, 102, 112, 122, 132, 142) verläuft, gebildet wird, zwischen 22,5° und 29,7° enthalten ist, und dadurch, dass die Schaufeln (8, 9, 10, 11, 12, 13, 14), in einer diametralen, zur Luftströmung orthogonalen Ebene betrachtet, gemäß einer Verteilung winkelig angeordnet sind, die nicht einheitlich ist, was bedeutet, dass sich der Winkelsektor, der die Vorderkante (83, 93, 103, 113, 123, 133, 143) einer Schaufel (8, 9, 10, 11, 12, 13, 14) von der Vorderkante der nächsten Schaufel trennt, von 360°/n unterscheidet, wobei "n" die Anzahl der Schaufeln ist, und die Trennungswinkel von zwei aufeinanderfolgenden Schaufeln eine globale Variation zwischen dem kleinsten Winkel und dem größeren Winkel von etwa 30 % aufweisen.

2. Turbine (1) nach Anspruch 1, **dadurch gekennzeichnet, dass** der Winkel (Δ) zur Verkeilung der Hinterkante am Fuße der Schaufel auf Seiten des unteren Flansches (7) und am Kopf der Schaufel auf Seiten des oberen Flansches (6) denselben Wert aufweist.

3. Turbine (1) nach Anspruch 1, **dadurch gekennzeichnet, dass** im Bereich der Verbindung der Hinterkante (82, 92, 102, 112, 122, 132, 142) und des oberen Flansches (6) der "Luftausgangswinkel" genannte Winkel "Gamma" (γ), der durch einerseits die radiale Richtung (r), die den oberen Flansch (6) beinhaltet, und andererseits die Senkrechte (p) zur distalen Ebene (P) des unteren Flansches (7) gebildet wird, zwischen 50° und 75° enthalten ist, und vorzugsweise in der Größenordnung von 62° ist.

4. Turbine (1) nach Anspruch 1, **dadurch gekennzeichnet, dass** sie einen Durchmesser von 250 mm aufweist, wobei die Profilsehne (C) einer Schaufel (8, 9, 10, 11, 12, 13, 14) eine Länge von 85 mm aufweist, wobei die Profilsehne (C) als Länge zwischen der Hinterkante (82, 92, 102, 112, 122, 132, 142) und der Vorderkante (83, 93, 103, 113, 123, 133, 143) definiert ist.

5. Turbine (1) nach einem der Ansprüche 1 bis 4, **dadurch gekennzeichnet, dass** der Winkel α, der durch die Profilsehne (C) und die Tangente (T1) am Radius, der durch das Ende der Vorderkante (83, 93, 103, 113, 123, 133, 143) verläuft, zwischen 7° und 22°, und vorzugsweise zwischen 10° und 18° enthalten ist, und auf ganz besonders bevorzugte Weise in der Größenordnung von 12° ist.

6. Turbine (1) nach Anspruch 5, **dadurch gekennzeichnet, dass** die Schaufeln (8, 9, 10, 11, 12, 13, 14) derart winkelig verteilt sind, dass sich das Baryzentrum der Gesamtheit der Schaufeln im Zentrum der Turbine (1) befindet, das mit deren Drehachse (X-X) um sich selbst zusammenfällt.

7. Turbine (1) nach Anspruch 5 oder 6, **dadurch gekennzeichnet, dass** der Wert eines ersten Winkels zwischen einer ersten Schaufel (8, 9, 10, 11, 12, 13, 14) und einer zweiten Schaufel größer als der Durchschnitt der Winkelwerte für die Gesamtheit der Schaufeln (8, 9, 10, 11, 12, 13, 14) ist, während der Wert eines zweiten Winkels zwischen der zweiten Schaufel und der dritten Schaufel kleiner als der Durchschnitt ist.

8. Verfahren zur Herstellung einer Reaktionsturbine (1) nach einem der Ansprüche 1 bis 7, die dazu bestimmt ist, durch Drehen um sich selbst einen Luftstrom zu kreieren, in der Art, Folgendes beinhaltend:
- einen unteren Flansch (7) und einen oberen Flansch (6), jeweils in einer im Allgemeinen ringförmigen Form, und im Wesentlichen parallel zueinander, und senkrecht zur Drehachse (X-X);
- eine Vielzahl von Schaufeln (8, 9, 10, 11, 12, 13, 14), die zwischen den beiden Flanschen (6, 7) angeordnet sind, in Bogenform, dergestalt, dass:
∘ die Hinter- (82, 92, 102, 112, 122, 132, 142) und Vorderkante (83, 93, 103, 113, 123, 133, 143) in Bezug auf die parallelen Ebenen der Flansche (6, 7) geneigt sind;
∘ die Neigung der Schaufeln (8, 9, 10, 11, 12, 13, 14) in Bezug auf die Drehachse (X-X) von der Vorderkante (83, 93, 103, 113, 123, 133, 143) bis zur Hinterkante (82, 92, 102, 112, 122, 132, 142) variiert;
∘ die Vorder- (83, 93, 103, 113, 123, 133, 143) und Hinterkante (82, 92, 102, 112, 122, 132, 142) in Bezug auf die Drehachse (X-X) jeweilige unterschiedliche Neigungen aufweisen;
∘ bei jeder Schaufel (8, 9, 10, 11, 12, 13, 14) der zur "Verkeilung an der Hinterkante" genannte Winkel (Delta) (Δ), der durch einerseits die Gerade (C), die durch die Hinterkante (82, 92, 102, 112, 122, 132, 142) und die Vorderkante (83, 93, 103, 113, 123, 133, 143) verläuft, und andererseits die Gerade, die durch die Tangente (T) am Fortbewegungskreis (D) der Hinterkante und die Hinterkante (82, 92, 102, 112, 122, 132, 142) verläuft, gebildet wird, zwischen 22,5° und 29,7° enthalten ist, wobei die Schaufeln (8, 9, 10, 11, 12, 13, 14) in einer diametralen, zur Luftströmung orthogonalen Ebene betrachtet, gemäß einer Verteilung winkelig angeordnet sind, die nicht einheitlich ist, was bedeutet, dass sich der Winkelsektor, der die Vorderkante (83, 93, 103, 113, 123, 133, 143) einer Schaufel (8, 9, 10, 11, 12, 13, 14) von der Vorderkante der nächsten Schaufel trennt, von 360°/n unterscheidet, wobei "n" die Anzahl der Schaufeln ist, und die Trennungswinkel von zwei aufeinanderfolgenden Schaufeln eine globale Variation zwischen dem kleinsten Winkel und dem größeren Winkel von etwa 30 % aufweisen,
wobei das Verfahren **dadurch gekennzeichnet ist, dass** einer der Flansche (6, 7), vorzugsweise der untere Flansch (7), und die Schaufeln (8, 9, 10, 11, 12, 13, 14) vorzugsweise in einem einzigen Stück durch Formen aus Kunststoffmaterial realisiert sind.

## Claims

1. A reaction turbine (1) intended to create an air flow, by rotation on itself, of the type including:
- a lower flange (7) and an upper flange (6), each having a generally annular shape, and substantially parallel to each other and perpendicular to the axis of rotation (X-X) ;
- a plurality of blades (8, 9, 10, 11, 12, 13, 14) disposed between the two flanges (6, 7), of an arcuate shape such that:
- the trailing (82, 92, 102, 112, 122, 132, 142) and leading (83, 93, 103, 113, 123, 133, 143) edges are inclined relative to the parallel planes of the flanges (6, 7);
- the inclination of the blades (8, 9, 10, 11, 12, 13, 14), relative to the axis of rotation (X-X), varies from the leading edge (83, 93, 103, 113, 123, 133, 143) to the trailing edge (82, 92, 102, 112, 122, 132, 142);
- the leading (83, 93, 103, 113, 123, 133, 143) and trailing (82, 92, 102, 112, 122, 132, 142) edges have respective different inclinations relative to the axis of rotation (X-X);
the turbine (1) being made by moulding, in plastic material, one of the flanges (6, 7), preferably the lower flange (7), on the one hand, and the blades (8, 9, 10, 11, 12, 13, 14), on the other hand, being made in one single piece, **characterised in that** for each blade (8, 9, 10, 11, 12, 13, 14), the angle (delta) (Δ), called "trailing edge pitch" angle, formed by, on the one hand, the straight line (C) passing through the trailing edge (82, 92, 102, 112, 122, 132, 142) and the leading edge (83, 93, 103, 113, 123, 133, 143), and, on the other hand, the straight line passing through the tangent (T) to the circle of displacement (D) of the trailing edge and the trailing edge (82, 92, 102, 112, 122, 132, 142), is comprised between 22.5° and 29.7°, and **in that** the blades (8, 9, 10, 11, 12, 13, 14) are disposed angularly, seen in a diametrical plane orthogonal to the flow of air, in a distribution which is not uniform, that is to say that the angular sector separating the leading edge (83, 93, 103, 113, 123, 133, 143) of a blade (8, 9, 10, 11, 12, 13, 14) from the leading edge of the next blade is different from 360°/n, "n" being the number of blades, and the separation angles of two consecutive blades have a global variation between the smallest angle and the largest angle of about 30%.

2. The turbine (1) according to claim 1, **characterised in that** the pitch angle (Δ) of the trailing edge has the same value at the root of the blade, on the side of the lower flange (7), and at the tip of the blade, on the side of the upper flange (6).

3. The turbine (1) according to claim 1, **characterised in that**, at the junction of the trailing edge (82, 92, 102, 112, 122, 132, 142) and the upper flange (6), the angle "gamma" (γ), called "air outlet angle", formed, on the one hand, by the radial direction (r) including the upper flange (6), and on the other hand, the perpendicular (p) to the distal plane (P) of the lower flange (7), is comprised between 50° and 75°, and preferably of the order of 62°.

4. The turbine (1) according to claim 1, **characterised in that** it has a diameter of 250 mm, the cord (C) of a blade (8, 9, 10, 11, 12, 13, 14) having a length of 85 mm, the cord (C) being defined as the length between the trailing edge (82, 92, 102, 112, 122, 132, 142) and the leading edge (83, 93, 103, 113, 123, 133, 143).

5. The turbine (1) according to one of claims 1 to 4, **characterised in that** the angle α formed by the cord (C) and the tangent (T1) to the radius passing through the end of the leading edge (83, 93, 103, 113, 123, 133, 143), is comprised between 7° and 22°, and preferably between 10° and 18°, and even more preferably is of the order of 12°.

6. The turbine (1) according to claim 5, **characterised in that** the blades (8, 9, 10, 11, 12, 13, 14) are angularly distributed so that the barycentre of all the blades is located in the centre of the turbine (1) coinciding with its axis of rotation (X-X) on itself.

7. The turbine (1) according to claim 5 or 6, **characterised in that** the value of a first angle, between a first blade (8, 9, 10, 11, 12, 13, 14) and a second blade, is greater than the average of the angle values for all the blades (8, 9, 10, 11, 12, 13, 14), while the value of a second angle, between the second blade and a third blade, is less than said average.

8. A method for manufacturing a reaction turbine (1) according to one of claims 1 to 7, intended to create an air flow, by rotation on itself, of the type including:
- a lower flange (7) and an upper flange (6), each having a generally annular shape, and substantially parallel to each other and perpendicular to the axis of rotation (X-X) ;
- a plurality of blades (8, 9, 10, 11, 12, 13, 14) disposed between the two flanges (6, 7), of an arcuate shape such that:
- the trailing (82, 92, 102, 112, 122, 132, 142) and leading (83, 93, 103, 113, 123, 133, 143) edges are inclined relative to the parallel planes of the flanges (6, 7);
- the inclination of the blades (8, 9, 10, 11, 12, 13, 14), relative to the axis of rotation (X-X), varies from the leading edge (83, 93, 103, 113, 123, 133, 143) to the trailing edge (82, 92, 102, 112, 122, 132, 142);
- the leading (83, 93, 103, 113, 123, 133, 143) and trailing (82, 92, 102, 112, 122, 132, 142) edges have respective different inclinations relative to the axis of rotation (X-X);
- for each blade (8, 9, 10, 11, 12, 13, 14), the angle (delta) (Δ), called "trailing edge pitch" angle, formed by, on the one hand, the straight line (C) passing through the trailing edge (82, 92, 102, 112, 122, 132, 142) and the leading edge (83, 93, 103, 113, 123, 133, 143) and, on the other hand, the straight line passing through the tangent (T) to the circle of displacement (D) of the trailing edge and the trailing edge (82, 92, 102, 112, 122, 132, 142), is comprised between 22.5° and 29.7°, the blades (8, 9, 10, 11, 12, 13, 14) being disposed angularly, seen in a diametrical plane orthogonal to the flow of air, in a distribution which is not uniform, that is to say that the angular sector separating the leading edge (83, 93, 103, 113, 123, 133, 143) of a blade (8, 9, 10, 11, 12, 13, 14) from the leading edge of the next blade is different from 360°/n, "n" being the number of blades, and the separation angles of two consecutive blades, have a global variation between the smallest angle and the largest angle, of about 30%,
the method being **characterised in that** one of the flanges (6, 7), preferably the lower flange (7), and the blades (8, 9, 10, 11, 12, 13, 14) are made in one single piece, preferably by moulding, in a plastic material.
